(19) Europäisches Patentamt / European Patent Office / Office européen des brevets

(11) **EP 3 387 619 B1**

(12) **FASCICULE DE BREVET EUROPEEN**

(45) Date de publication et mention de la délivrance du brevet:
**08.01.2020 Bulletin 2020/02**

(21) Numéro de dépôt: **16810324.0**

(22) Date de dépôt: **09.12.2016**

(51) Int Cl.:
*G06T 7/20* *(2017.01)*    *G06T 7/246* *(2017.01)*
*G06T 7/277* *(2017.01)*

(86) Numéro de dépôt international:
**PCT/EP2016/080402**

(87) Numéro de publication internationale:
**WO 2017/097964 (15.06.2017 Gazette 2017/24)**

(54) **DETECTION ET SUIVI DE RAILS DANS UN FLUX VIDEO**

ERKENNUNG UND ÜBERWACHUNG VON SCHIENEN IN EINEM VIDEOSTREAM

DETECTION AND MONITORING OF RAILS IN A VIDEO STREAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.12.2015 FR 1562142**

(43) Date de publication de la demande:
**17.10.2018 Bulletin 2018/42**

(73) Titulaire: **COMMISSARIAT À L'ÉNERGIE ATOMIQUE ET AUX ÉNERGIES ALTERNATIVES**
**75015 Paris (FR)**

(72) Inventeur: **ALLEZARD, Nicolas**
**75014 Paris (FR)**

(74) Mandataire: **Brevalex**
**95, rue d'Amsterdam**
**75378 Paris Cedex 8 (FR)**

(56) Documents cités:
**WO-A1-2009/017884**

• **RALPH ROSS: "Track and turnout detection in video-signals using probabilistic spline curves", INTELLIGENT TRANSPORTATION SYSTEMS (ITSC), 2012 15TH INTERNATIONAL IEEE CONFERENCE ON, IEEE, 16 septembre 2012 (2012-09-16), pages 294-299, XP032263937, DOI: 10.1109/ITSC.2012.6338605 ISBN: 978-1-4673-3064-0 cité dans la demande**
• **ROSS R: "Vision-based track estimation and turnout detection using recursive estimation", INTELLIGENT TRANSPORTATION SYSTEMS (ITSC), 2010 13TH INTERNATIONAL IEEE CONFERENCE ON, IEEE, PISCATAWAY, NJ, USA, 19 septembre 2010 (2010-09-19), pages 1330-1335, XP031792569, ISBN: 978-1-4244-7657-2**
• **JORGE CORSINO ESPINO ET AL: "Rail extraction technique using gradient information and a priori shape model", INTELLIGENT TRANSPORTATION SYSTEMS (ITSC), 2012 15TH INTERNATIONAL IEEE CONFERENCE ON, IEEE, 16 septembre 2012 (2012-09-16), pages 1132-1136, XP032264201, DOI: 10.1109/ITSC.2012.6338870 ISBN: 978-1-4673-3064-0**

**Description**

**DOMAINE TECHNIQUE**

La présente invention concerne la détection et le suivi de rails dans un flux vidéo.

Elle peut être mise en œuvre par exemple dans le cadre d'une surveillance d'intrusion sur la voie à l'avant d'un train, métro ou tramway en mouvement, ou d'une détection automatique des signaux ferroviaires, la position des rails permettant de guider la recherche des signaux qui s'adressent au train équipé du système.

Elle peut encore être utilisée pour la conduite automatique d'un train.

**ÉTAT DE LA TECHNIQUE ANTÉRIEURE**

La thèse intitulée « Détection de rails, caractérisation de croisements et localisation de trains sur la trajectoire d'un métro automatique » de Jorge Corsino Espino, Ecole Nationale Supérieure des Mines de Paris, 2014, divulgue une méthode nécessitant une calibration caméra et utilisant une transformation homographique de l'image pour obtenir une vue de dessus. La méthode comporte des recherches indépendantes des rails gauche et droit respectivement, et utilise un modèle de rails peu flexible (polynôme du second degré seulement), dédié au métro automatique. Elle utilise également un filtre de Kalman pour le suivi. Ce type de filtre est peu réactif et il rend complexe le fait de lier les mesures à la détection des rails. En outre, cette méthode ne prévoit pas de changement de voie lors d'une bifurcation pendant le suivi de rails.

L'article intitulé « Track and turnout détection in video-signals using probabilistic spline curves », de R. Ross, dans « Intelligent Transportation Systems (ITSC), 2012 », ainsi que l'article intitulé « Vision-based track estimation and turnout détection using recursive estimation », de R.Ross, dans « Intelligent Transportation Systems (ITSC), 2010 », divulguent une méthode pour le suivi et la détection de rails qui utilise une spline cubique pour la modélisation de la courbure de rails. Ce modèle est plus flexible que celui utilisé dans le document précédent. Cependant, cette spline est située dans le repère 3D du monde puis projetée dans l'image à l'aide de la connaissance de la calibration de la caméra, de sa position par rapport aux rails et d'un modèle de mouvement du train et de sa vitesse. Cette projection est complexe. Cette méthode met en œuvre un filtre de Kalman pour le suivi. Cette méthode est complexe à mettre en place car elle nécessite un modèle complet du train ainsi que la connaissance du déplacement du train sur les voies.

D'une façon générale, les méthodes basées sur une transformation entière de l'image, telle que la transformation homographique de l'image, nécessitent un temps de calcul important. De plus, cela introduit du flou pour les points les plus éloignés de la représentation transformée des rails, ce qui nuit à la détection des contours.

Les techniques présentées dans les documents précédents nécessitent la connaissance précise des paramètres internes de la caméra (calibration) ainsi que le positionnement précis de celle-ci par rapport au plan contenant les rails. Une phase d'instrumentation lourde est donc nécessaire lors de l'installation du système. En outre, les variations du plan du sol ainsi que les effets dus au tangage et roulis du train imposent une mise à jour régulière de ces paramètres par une méthode analysant la convergence des points de fuite de droites détectées dans l'image. Cette mise à jour est cependant sujette aux erreurs.

Pour pallier les difficultés dues à la calibration des systèmes des documents précédents et s'affranchir du flou des points les plus éloignés de la représentation transformée des rails, on peut se tourner vers l'article intitulé « Rail Extraction for Driver Support in Railways » de B.T. Nassu and M.Ukai, dans « Intelligent Vehicles Symposium (IV), 2011 ». Ce document expose une méthode complexe, utilisant un grand nombre de paramètres qui ont été optimisés par un algorithme génétique. La méthode propose deux approches différentes pour les rails proches et lointains. Les rails proches sont recherchés à l'aide de patrons ou modèles pré-calculés mais il n'est pas précisé comment sont générés ces modèles. Pour les rails lointains, les rails gauches et droits sont détectés séparément, ce qui rend l'estimation plus fragile. En outre, cette méthode ne prévoit pas de changement de voie lors d'une bifurcation pendant le suivi de rails. Enfin, cette méthode de suivi des rails est assez heuristique.

**EXPOSÉ DE L'INVENTION**

L'invention vise à résoudre les problèmes de la technique antérieure en fournissant un procédé de détection et suivi de rails dans des images d'un flux vidéo filmé parallèlement à l'axe des rails, comportant, pour au moins une image du flux vidéo, l'étape de :

Formation d'une image de contours de rails,
caractérisé en ce qu'il comporte, pour ladite au moins une image du flux vidéo, les étapes de :

Estimation, par filtrage particulaire, d'un ensemble de modèles pondérés de représentation de rails en fonction de l'image de contour de rails, chaque modèle étant défini par des paramètres qui comportent d'une part les abscisses de points de contrôle d'une représentation d'un axe central des rails dans un repère défini dans l'image, les ordonnées des points de contrôle étant prédéfinies et distinctes, et d'autre part des coefficients d'une fonction linéaire représentant la distance entre la représentation de l'axe central des rails et respectivement des représentations des rails gauche et droit en fonction de l'ordonnée dans le repère de l'image,

Estimation de la position des rails dans l'image en fonction de l'ensemble de modèles pondérés.

Grâce à l'invention, la détection et le suivi de rails peuvent être réalisés en temps réel dans le flux d'images vidéo.

La modélisation utilisée par l'invention permet de s'affranchir de la connaissance géométrique du système et des paramètres de la caméra pour déterminer la position de celle-ci par rapport aux rails. Par conséquent, grâce à l'invention aucun processus de calibration de la caméra n'est nécessaire.

Selon l'invention, les rails sont modélisés directement dans l'image, sans transformation homographique de l'image ni des points détectés en « vue de dessus ». Une telle transformation aurait pour but de s'affranchir de l'effet de perspective sur l'écartement des rails (plus on s'éloigne plus cet écartement diminue).

Un autre avantage de l'invention est qu'elle repose sur une modélisation des deux rails ainsi que de leur écartement considérés comme un tout. Ainsi, il ne peut pas y avoir de divergence dans le tracé des rails.

En outre, la modélisation utilisée par l'invention nécessite moins de paramètres que les modélisations dans lesquelles les deux rails sont modélisés indépendamment l'un de l'autre.

La modélisation utilisée par l'invention permet aussi de gérer le cas où aucun point de contour n'est détecté sur l'un des deux rails.

La modélisation utilisée par l'invention est suffisamment souple pour bien s'adapter aux différentes configurations de rails rencontrées avec un nombre réduit de paramètres, N+2 avec N compris entre 4 et 6. En particulier, cette modélisation est plus souple que les modélisations formées par des polynômes du deuxième degré.

L'invention met en œuvre un filtre particulaire qui est plus réactif qu'un filtre de Kalman.

Selon une caractéristique préférée, le procédé de détection et suivi de rails comporte en outre une étape d'initialisation à laquelle sont déterminés les coefficients de la fonction linéaire représentant la distance entre la représentation de l'axe central des rails et respectivement les représentations des rails gauche et droit en fonction de l'ordonnée dans le repère de l'image. Cette initialisation est effectuée une fois pour toutes.

Selon une caractéristique préférée, la représentation de l'axe central des rails est une spline cubique. Ce type de représentation est bien adapté aux traitements effectués pour détecter et suivre les rails.

Selon une caractéristique préférée, l'ensemble de modèles de représentation de rails utilisé pour une image courante du flux vidéo qui n'est pas la première image du flux vidéo est déterminé par ré-échantillonnage et déplacement des modèles de représentation de rails pondérés d'une image précédente dans le flux vidéo. Cette détermination implique des calculs qui sont rapides à effectuer.

Selon une caractéristique préférée, l'estimation, par filtrage particulaire, de l'ensemble de modèles pondérés de représentation de rails comporte le calcul d'un poids pour chaque modèle de l'ensemble, le poids d'un modèle représentant l'adéquation du modèle à l'image de contours.

Selon une caractéristique préférée, le calcul du poids d'un modèle donné comporte les étapes de :

Calcul de la somme des valeurs de pixels de l'image de contours qui sont proches des rails du modèle donné, pour chaque ligne du modèle donné,

Décrémentation du poids du modèle donné, à chaque fois que la somme calculée pour une ligne est nulle,

Sommation du poids du modèle donné et de la somme des valeurs de pixels de l'image de contours qui sont proches des rails du modèle donné, à chaque fois que la somme calculée pour une ligne n'est pas nulle,

Elévation à une puissance supérieure à 2 du poids du modèle donné, après que les étapes de calcul, décrémentation et sommation aient été effectuées pour toutes les lignes du modèle donné.

Selon une caractéristique préférée, l'estimation de la position des rails dans l'image comporte la détermination de paramètres d'estimation, un paramètre d'estimation étant calculé par la somme des paramètres correspondants de l'ensemble des modèles pondérés déterminés à l'étape d'estimation par filtrage particulaire, chacun des paramètres étant pondéré par leur poids respectif du modèle auquel il appartient.

Selon une caractéristique préférée, l'estimation de la position des rails est pondérée en fonction de sa correspondance à l'image de contour de rails et son poids est comparé à un seuil de poids.

Selon une caractéristique préférée, le procédé de détection et suivi de rails comporte en outre des étapes de :

Calcul de la moyenne de l'abscisse d'un point de contrôle sur une fenêtre temporelle glissante d'estimations de la position des rails consécutives,

Comparaison de l'abscisse courante du point de contrôle d'une estimation de la position courante des rails à la moyenne calculée,
Détection d'un changement de voie si l'écart est supérieur à un seuil d'écart.

Selon une caractéristique préférée, le procédé de détection et suivi de rails comporte une réinitialisation si le poids de l'estimation de la position des rails est inférieur au seuil de poids ou si un changement de voie est détecté ou encore lorsque le procédé est remis en marche après un arrêt.

L'invention concerne aussi un dispositif de détection et suivi de rails dans des images d'un flux vidéo filmé parallèlement à l'axe des rails, comportant, pour au moins une image du flux vidéo :

Des moyens de formation d'une image de contours de rails,
caractérisé en ce qu'il comporte, pour ladite au moins une image du flux vidéo :

Des moyens d'estimation, par filtrage particulaire, d'un ensemble de modèles pondérés de représentation de rails en fonction de l'image de contour de rails, chaque modèle étant défini par des paramètres qui comportent d'une part les abscisses de points de contrôle d'une représentation d'un axe central des rails dans un repère défini dans l'image, les ordonnées des points de contrôle étant prédéfinies et distinctes, et d'autre part des coefficients d'une fonction linéaire représentant la distance entre la représentation de l'axe central des rails et respectivement des représentations ses rails gauche et droit en fonction de l'ordonnée dans le repère de l'image,
Des moyens d'estimation de la position des rails dans l'image en fonction de l'ensemble de modèles pondérés.

Le dispositif présente des avantages analogues à ceux précédemment présentés.

Dans un mode particulier de réalisation, les étapes du procédé selon l'invention sont mises en œuvre par des instructions de programme d'ordinateur.

En conséquence, l'invention vise aussi un programme d'ordinateur sur un support d'informations, ce programme étant susceptible d'être mis en œuvre dans un ordinateur, ce programme comportant des instructions adaptées à la mise en œuvre des étapes d'un procédé tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions de programme d'ordinateur adaptées à la mise en œuvre des étapes d'un procédé tel que décrit ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé selon l'invention.

## BRÈVE DESCRIPTION DES DESSINS

D'autres caractéristiques et avantages apparaîtront à la lecture de la description suivante d'un mode de réalisation préféré, donné à titre d'exemple non limitatif, décrit en référence aux figures dans lesquelles :

La figure 1 représente un procédé de détection et suivi de rails selon un mode de réalisation de la présente invention,
La figure 2 représente un modèle de représentation de rails utilisé dans le procédé de la figure 1, selon un mode de réalisation de la présente invention,
La figure 3 représente une initialisation effectuée dans le procédé de la figure 1, selon un mode de réalisation de la présente invention,
La figure 4 représente des étapes de filtrage particulaire mises en œuvre dans le procédé de la figure 1, selon un mode de réalisation de la présente invention,
La figure 5 représente des étapes de pondération des modèles mises en œuvre dans le procédé de la figure 1, selon un mode de réalisation de la présente invention,
La figure 6 représente des étapes de réinitialisation mises en œuvre dans le procédé de la figure 1, selon un mode de réalisation de la présente invention, et
La figure 7 représente un dispositif de mise en œuvre du procédé de la figure 1, selon un mode de réalisation de la présente invention.

## EXPOSÉ DÉTAILLÉ DE MODES DE RÉALISATION PARTICULIERS

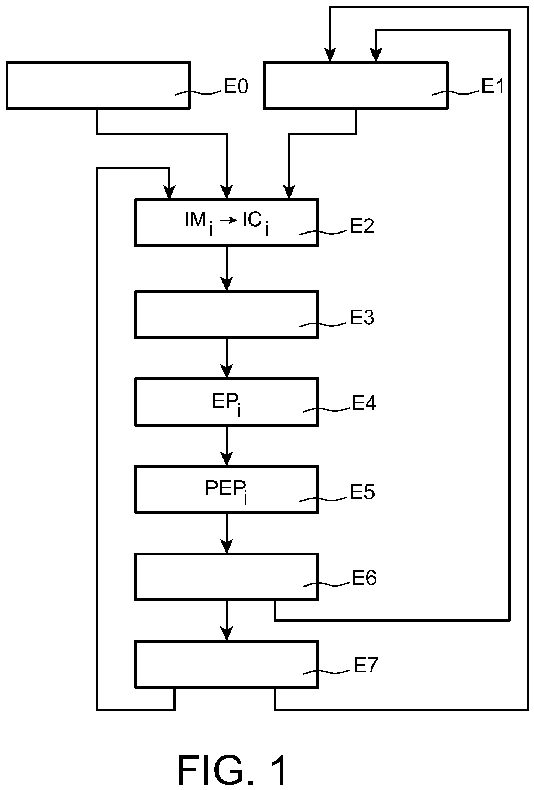

Selon un mode de réalisation préféré, représenté à la **figure 1**, le procédé de détection et suivi de rails dans un flux d'images vidéo comporte des étapes E0 à E7.

La mise en œuvre du procédé suppose qu'une caméra soit préalablement installée à l'avant d'un train de manière à filmer dans une direction parallèle à l'axe de déplacement du train et donc parallèle à l'axe des rails.

L'étape E0 est une initialisation qui permet de déterminer l'écartement des rails vu depuis la caméra.

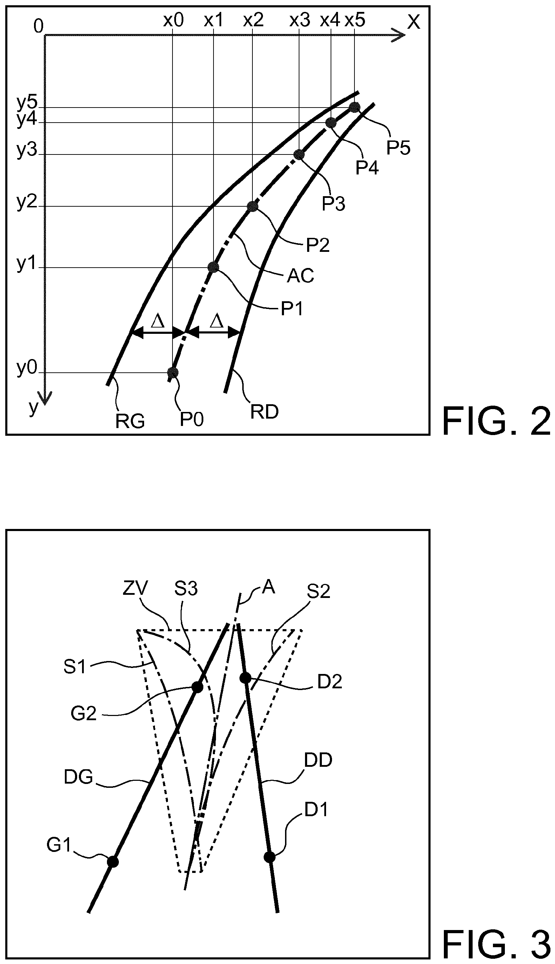

L'initialisation dépend d'un modèle de représentation de rails qui sera utilisé dans la suite. Comme représenté à la **figure 2**, un repère (0, x, y) est défini dans l'image et le modèle de représentation de rails est constitué de la manière suivante :

- l'axe central inter-rails AC est représenté par une spline cubique à N points de contrôles $P_0$ à $P_{N-1}$,
- la distance $\Delta$ entre l'axe central et les rails gauche RG et droit RD est représentée par une fonction linéaire par rapport à la hauteur y dans l'image : $\Delta(y)=a*y+b$

Il s'agit donc d'un modèle de représentation de rails à N+2 paramètres, où N représente le nombre de points de contrôle dans l'image. Dans l'exemple représenté, N est égal à 6. Les points de contrôle $P_0$ à $P_5$ ont des ordonnées fixes $y_0$ à $y_5$ et des abscisses $x_0$ à $x_5$. Ces points de contrôle constituent six paramètres du modèle. Les deux autres paramètres sont les coefficients a et b de la fonction linéaire représentant la distance entre l'axe central et les rails gauche et droit en fonction de la hauteur y dans l'image.

Le sol sur lequel sont disposés les rails est supposé plan et l'axe de prise de vue de la caméra est parallèle au plan du sol. Dans le cas d'une projection de perspective, l'écart $\Delta$ entre l'axe central AC et les rails latéraux RG et RD est linéaire par rapport à la hauteur y dans l'image. Les paramètres a et b de la fonction dépendent de la distance inter-rails, de la hauteur de la caméra et de l'angle d'inclinaison de la caméra par rapport aux rails ainsi que de paramètres internes de celle-ci, selon la formule :

$$\Delta = \frac{L}{2.Hc}.\cos(\alpha).y - \frac{L}{2.Hc}.\left(\cos(\alpha).y_P + f.\sin(\alpha)\right)$$

Où L représente la distance inter-rails, Hc la hauteur de la caméra par rapport aux rails, $\alpha$ l'angle d'inclinaison de la caméra par rapport aux rails, f la focale de la caméra en pixels et $y_P$ l'ordonnée du point principale dans l'image.

En pratique, les paramètres a et b ne sont pas calculés selon cette équation mais ils sont estimés lors de l'étape d'initialisation E0 du suivi à partir de la position des rails dans l'image, donnée par l'utilisateur. Ainsi, aucune connaissance à priori sur la caméra ni sur sa position par rapport aux rails n'est nécessaire.

L'étape d'initialisation E0 est donc effectuée une fois pour toutes, tant que la position de la caméra n'est pas modifiée. L'utilisateur définit la position des deux rails dans l'image, par exemple en désignant au moins deux points par rail en les pointant avec une souris d'ordinateur ou par tout autre moyen.

Les paramètres a et b sont ensuite estimés et plusieurs hypothèses de modèles de rails sont générées aléatoirement à partir de la position des rails donnée par l'utilisateur comme exposé dans la suite.

Il est précisé que, sauf mention contraire, pour alléger la description suivante, on parle de l'axe central et des rails gauche et droit pour désigner leur représentation dans l'image.

Comme représenté à la **figure 3**, deux points par rail sont déterminés dans l'image. Les points sont référencés G1, G2, D1 et D2. Il est bien-sûr possible de déterminer plus de deux points par rail. On a tracé en trait plein les droites gauche DG et droite DD joignant respectivement les points G1 et G2 du rail gauche et les points D1 et D2 du rail droit. Un axe A représente l'axe central AC des rails. Les coefficients a et b sont déterminés à partir des droites gauche DG et droite DD ainsi que de l'axe central AC.

La zone ZV de variation de l'axe central AC, c'est-à-dire les abscisses possibles pour les points de contrôle de la spline cubique, est un quadrilatère. Plus on s'éloigne dans l'image, c'est-à-dire plus l'ordonnée y diminue dans le repère tel que défini, plus la zone ZV est large afin de permettre à la spline de s'adapter aux courbures des rails. Trois exemples de splines générées aléatoirement S1, S2 et S3 sont représentées.

Les étapes suivantes E2 à E7 sont réalisées pour toutes les images du flux vidéo, soit en temps réel, soit sur le flux vidéo enregistré.

Il est à noter que lorsque le système a été arrêté ou en cas de perte momentanée des rails ou encore en cas de détection d'un changement de voie, l'étape E2 est précédée d'une étape E1 qui est décrite dans la suite.

L'étape E2 est une détection des contours des rails dans une image courante $IM_i$ du flux vidéo fourni par la caméra, où i est un indice représentant le rang de l'image dans le flux.

Pour cela, l'image est filtrée par un filtre de Canny ou détecteur de Canny, qui est classique en traitement d'image pour la détection des contours. Le filtrage de l'image IM$_i$ est basé sur le calcul du gradient de l'intensité lumineuse dans l'image et le seuillage de la norme du gradient par hystérésis. Les paramètres de cette méthode sont la valeur de l'écart des filtres gaussiens utilisés pour le calcul du gradient ainsi que les valeurs hautes et basses du seuillage par hystérésis.

De préférence, des valeurs assez basse de seuillage (en pratique de 5 à 10 niveaux de gris) sont choisies afin d'obtenir suffisamment de contours sur les rails même dans des conditions difficiles où l'image manque de contraste. Cela peut provoquer beaucoup de contours parasites dans les autres cas.

Afin de réduire ces contours parasites, les contours sont tout d'abord filtrés en fonction de l'angle du gradient qui leur est associé afin de ne conserver que les contours dont la direction est compatible avec celle attendue pour les rails.

En outre, sur les zones fortement texturées, comme le ballast entourant les rails, beaucoup de petits contours persistent. Ces contours peuvent perturber l'estimation de la position des rails et augmenter le temps de traitement ultérieur. Les contours isolés constitués de moins 10 pixels sont donc de préférence supprimés.

Le résultat de l'étape E2 de détection de contours pour une image IM$_i$ du flux vidéo est une image de contours de rails IC$_i$, sous la forme d'une image binaire.

En variante, d'autres modes de filtrage peuvent être mis en œuvre, comme une méthode de détection des rails basée sur un apprentissage statistique de leur apparence visuelle. Dans ce cas l'image obtenue n'est pas binaire mais est une image pondérée, le poids affecté à chaque pixel correspondant à une probabilité que le pixel fasse partie de la représentation d'un rail dans l'image du flux vidéo.

Pour une image de contours de rail donnée IC$_i$, l'étape suivante E3 est un filtrage particulaire de l'ensemble des modèles de représentation de rails M$_j$ en fonction de l'image de contour de rails, de manière à estimer un ensemble de modèles pondérés.

Le filtrage particulaire qui est décrit dans la suite est basé sur un ensemble de M modèles M$_j$, où M est un entier valant par exemple 500 et j est un indice représentant le rang du modèle courant dans l'ensemble de modèles. Comme précédemment exposé, chaque modèle M$_j$ est défini par N+2 paramètres X$_{jk}$, où j varie entre 0 et (M-1) et k est un indice variant entre 0 et (N+1). Les N premiers paramètres du modèle courant M$_j$ sont les abscisses de N points de contrôle dans l'image. Les ordonnées de ces N points de contrôle sont prédéterminées. Les deux derniers paramètres sont les coefficients a et b de la fonction linéaire représentant la distance entre l'axe central des rails et les rails gauche et droit par rapport à la hauteur y dans l'image.

Pour la première image de contours de rails du flux vidéo, l'ensemble de modèles est déterminé aléatoirement. Pour les images suivantes, l'ensemble de modèles dépend du résultat du filtrage particulaire effectué pour l'image précédente. Plus précisément, l'ensemble de modèles résultant de l'étape E33 décrite dans la suite, effectuée pour l'image précédente, constitue l'ensemble de modèles considéré ici pour l'image courante.

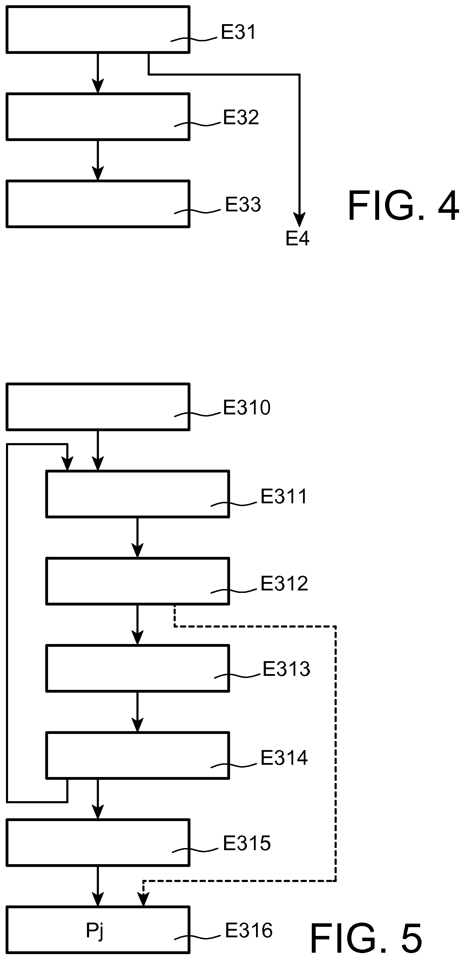

Comme représenté à la **figure 4**, l'étape E3 comporte des sous-étapes E31 à E33. L'étape E31 est le calcul de poids P$_j$ pour les modèles M$_j$, chaque poids P$_j$ représentant l'adéquation du modèle respectif M$_j$ à l'image de contour de rails IC$_i$. Chaque modèle M$_j$ est considéré comme une hypothèse ou particule.

Comme représenté à la **figure 5**, l'étape E31 comporte des sous-étapes E310 à E316 qui sont décrites pour un modèle courant M$_j$. Ces étapes sont effectuées pour tous les modèles considérés.

L'étape E310 est une initialisation à la valeur zéro du poids du modèle donné M$_j$.

Les étapes suivantes E311 à E314 sont effectuées pour chaque ligne du modèle donné M$_j$, une ligne étant définie par l'ensemble des points ayant la même ordonnée.

L'étape E311 est le calcul de l'abscisse de l'axe central des rails, de l'écart inter-rails et des abscisses des rails gauche et droit, pour une ligne donnée du modèle donné.

L'étape suivante E312 est un test pour vérifier si la différence entre l'abscisse du rail droit et l'abscisse du rail gauche est inférieure à un seuil d'écart prédéterminé. Si la réponse est négative, alors la configuration est jugée comme impossible, la boucle de calcul est terminée et le modèle courant est rejeté. Un poids nul est affecté au modèle courant. L'étape E312 est alors suivie de l'étape E316 qui sera décrite dans la suite.

Si la réponse est positive à l'étape E312, cette étape est alors suivie de l'étape E313. L'étape E313 est un calcul de la somme des valeurs de pixels de l'image de contours de rails qui sont à une distance inférieure à une valeur prédéterminée ε des abscisses des rails gauche et droit calculées à l'étape E311 pour le modèle donné. On évalue donc le nombre de points de contour proches du modèle.

Il est à noter qu'il est possible de pré-calculer pour chaque pixel de coordonnées (x, y) la somme locale des valeurs de pixels de la ligne d'ordonnée y de l'image, entre (x-ε) et (x+ε). Ce pré-calcul peut être effectué dès que l'image de contours est déterminée (étape E2), et ce pour les zones situées autour de la position des rails dans l'image de contours. Ainsi le résultat de ce pré-calcul est utilisé à chaque fois que l'étape E313 est parcourue, c'est-à-dire pour chaque ligne de chacun des M modèles.

L'étape suivante E314 est un test pour vérifier si la somme calculée à l'étape précédente est nulle. Si la réponse est positive, alors la valeur du poids du modèle donné M$_j$ est décrémentée de un. Cela a pour but de pénaliser les modèles qui se trouvent dans de larges zones sans points de contour. Dans le cas contraire, la valeur du poids du

modèle donné M$_j$ est augmentée de la somme calculée à l'étape E313.

Lorsque les étapes E311 à E314 ont été effectuées pour chaque ligne du modèle courant, l'étape E314 est suivie de l'étape E315 à laquelle la valeur du poids du modèle courant est normée par rapport au nombre de lignes du modèle.

A l'étape suivante E316, le poids calculé à l'étape E315 est élevé à la puissance p, où p vaut par exemple 8 ou 9. Cette dernière opération a pour but d'augmenter la dynamique de la fonction de vraisemblance et donc les différences entre les poids associés aux différents modèles.

En effet, la plus grand part du poids est réalisée dans le bas de l'image, sur la partie la plus linéaire des rails et donc la plus aisée à estimer. Grâce à l'étape E316, les variations du poids dans la partie haute de l'image, où les rails sont les plus susceptibles de présenter des courbures importantes, ont plus d'incidence sur le poids du modèle. Il en résulte une bonne estimation de la position des rails non seulement dans la partie base mais aussi dans la partie haute.

Le résultat de l'étape E316 est le poids P$_j$ affecté au modèle courant M$_j$.

Lorsque les étapes E310 à E316 ont été parcourues pour tous les modèles à considérer, l'étape E31 a pour résultat une pondération des modèles M$_j$ en fonction de leur correspondance à l'image de contour de rails IC$_i$. Cet ensemble de modèles pondérés est ensuite utilisé à l'étape E4 qui sera décrite dans la suite, pour estimer la position des rails dans l'image de contours IC$_i$. L'étape E31 est donc suivie de l'étape E4.

L'étape E31 est également suivie de l'étape E32 qui est un ré-échantillonnage des modèles M$_j$. Le ré-échantillonnage, ou sélection, permet d'éviter la dégénérescence des modèles. Le ré-échantillonnage forme un nouvel ensemble de modèles dans lequel les modèles en cours sont multipliés ou éliminés en fonction de leur poids, c'est-à-dire que les modèles auront d'autant plus de descendants à la génération suivante que leur poids est élevé. Par exemple, on effectue des tirages aléatoires de modèles, un modèle ayant d'autant plus de chances d'être tiré si son poids est élevé.

L'étape suivante E33 est un déplacement, ou mutation, des modèles de l'ensemble formé à l'étape précédente, dans l'espace d'états.

Un modèle de déplacement de modèle consiste à bruiter les paramètres du modèle en leur appliquant un bruit gaussien centré et d'écart-type plus ou moins faible suivant la nature du paramètre. En pratique, l'écart-type est faible pour les deux paramètres relatifs à l'estimation de l'écart inter-rails ainsi que pour les points de contrôles correspondants à la partie linéaire des rails dans le bas de l'image. Pour les parties hautes de l'image, cet écart-type est plus important de façon à permettre au modèle de s'adapter aux variations du rayon de courbure des rails.

Le résultat de l'étape E33 est un ensemble de nouveaux modèles estimés M'$_j$, qui sont mémorisés pour être utilisés pour l'image suivante dans le flux vidéo.

L'étape E4 est une estimation de la position des rails. Cette estimation est faite pour une image de contours de rail donnée IC$_i$.

L'estimation EPi de la position des rails est déterminée par (N+2) paramètres d'estimation $\tilde{X}_k$, avec k variant de 0 à N+1, qui sont calculés en fonction de l'ensemble de modèles M$_j$ et de leurs poids P$_j$ résultant de l'étape E31.

Pour cela, chaque paramètre d'estimation est estimé par la somme pondérée des paramètres respectivement correspondants des M modèles, le poids de chaque modèle étant appliqué à son paramètre :

$$\widetilde{X}_k = \sum_{j=0}^{M-1} P_j . X_{jk} \, ,$$

Où X$_{jk}$ est le k$^{\text{ième}}$ paramètre du modèle M$_j$.

Le résultat de l'étape E4 est une estimation EP$_i$ de la position des rails pour l'image IM$_i$. L'estimation EP$_i$ de la position des rails est définie par ses N+2 paramètres $\tilde{X}_k$.

L'étape suivante E5 est le calcul du poids PEP$_i$ de l'estimation de la position des rails EP$_i$. Le poids est calculé de manière similaire à ce qui a été décrit en référence à l'étape E31.

L'étape suivante E6 est un calcul d'une moyenne sur une fenêtre temporelle glissante de l'abscisse du point de contrôle le plus bas dans l'estimation de la position des rails EP$_i$. Dans le cas d'une bifurcation le suivi peut se faire sur le mauvais embranchement, il est donc nécessaire de détecter l'instant de bifurcation et de relancer le suivi sur la bonne voie.

Si l'écart entre cette valeur moyenne et la position courante du point de contrôle le plus bas dans l'estimation de position EP$_i$ courante est supérieur à un seuil d'écart prédéterminé, on considère que le train est en train de changer de voie. Le signe de l'écart entre valeur courante et valeur moyenne donne une indication très fiable sur la voie à suivre. En effet, si le train suit la voie de gauche alors que le suivi se fait sur la voie de droite, l'écart devient fortement positif, et inversement dans le cas contraire. Cette indication permet d'orienter la recherche des rails pour la réinitialisation du suivi qui sera exposée dans la suite.

Si un changement de voie est détecté, alors le procédé de détection et suivi de rails est réinitialisé, comme exposé dans la suite.

Si l'écart calculé n'est pas supérieur au seuil d'écart prédéterminé, l'étape E6 est suivie de l'étape E7 qui est un test pour déterminer si le poids calculé à l'étape E5 est supérieur à un seuil de poids prédéterminé. Si la réponse est positive, alors l'estimation de position EP$_i$ est jugée comme satisfaisante et l'estimation est alors par exemple représentée sur un écran de visualisation. L'étape E7 est ensuite suivie de l'étape E2 précédemment décrite, à laquelle l'image suivante dans le flux vidéo est traitée.

Si la réponse à l'étape E7 est négative, alors l'estimation de position des rails EP$_i$ est jugée comme erronée et le procédé de détection et suivi de rails est réinitialisé, comme exposé dans la suite.

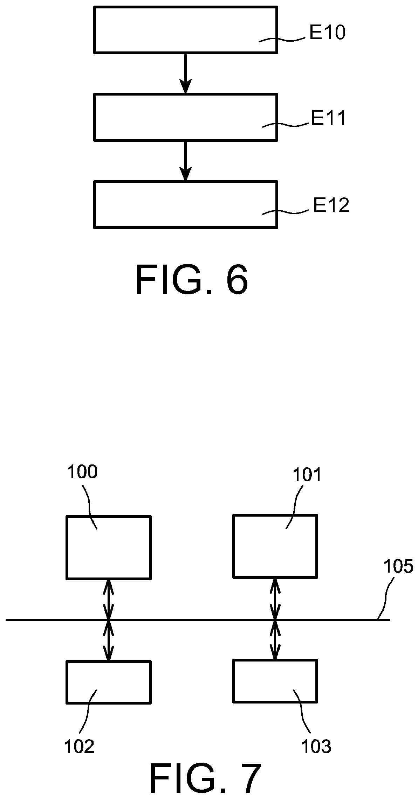

Dans ce cas, l'étape E7 est suivie de l'étape E1. L'étape E1 de réinitialisation du procédé de détection et suivi de rails est décrite en référence à la **figure 6**, et comporte des étapes E10 à E12, qui sont parcourues en cas de perte momentanée des rails dans l'image de contours (réponse négative à l'étape E7) ou en cas de changement de voie détecté à l'étape E6 ou encore lorsque le système est remis en marche après un arrêt du train. En effet, un arrêt du train provoque un arrêt du procédé et lorsque le train redémarre, le procédé repart de l'étape E1.

Dans le cas de perte des rails dans l'image de contours, l'étape E10 est une détection de ligne droites dans la partie basse de l'image de contours sur une zone centrée sur la valeur moyenne du point de contrôle le plus bas (étape E6), par exemple en utilisant une transformée de Hough classique.

A l'étape suivante E11, tous les couples formés par ces droites sont considérés. Une recherche des couples compatibles avec les paramètres a et b de l'écartement des rails estimés auparavant lors du suivi (deux derniers paramètres de l'estimation de la position des rails EP$_i$) est effectuée.

A l'étape suivante E12, un filtrage particulier est initialisé et itéré plusieurs fois sur la même image de contours jusqu'à stabilisation. Ce filtrage particulier est similaire à ce qui a été décrit en référence à la figure 4. Le modèle final obtenu donnant le poids le plus élevé est retenu comme hypothèse si son poids est supérieur au seuil de poids prédéterminé. Lorsque c'est le cas, l'étape E12 est suivie de l'étape E2 et le suivi est poursuivi pour l'image suivante dans le flux vidéo.

Si le poids du meilleur modèle reste inférieur au seuil de poids prédéterminé, le processus de réinitialisation est relancé dans l'image suivante et ce jusqu'à ce qu'un modèle ayant un poids supérieur au seuil de poids prédéterminé soit trouvé.

Dans le cas de changement de voie détecté à l'étape E6, l'étape E10 est adaptée pour que la détection des droites sur la partie basse de l'image soit faite dans une zone élargie et décalée latéralement en fonction de l'écart observée entre la position moyenne des rails et la position courante.

L'étape E12 est également adaptée pour tester en premier le couple de droite qui se trouve le plus à gauche dans le cas où une bifurcation vers la gauche est détectée, ou le plus à droite dans le cas inverse. Le filtre particulaire est ensuite initialisé et itéré jusqu'à stabilisation sur cette première hypothèse. Si le poids final obtenu est supérieur au seuil de poids prédéterminé, cette hypothèse est retenue. Sinon, le deuxième couple le plus à gauche, respectivement à droite, est testé, et ainsi de suite tant qu'un poids supérieur au seuil de poids prédéterminé n'est pas trouvé.

Selon une variante de réalisation, l'étape E0 d'initialisation est automatique. Dans ce cas, elle comporte la formation d'une image de contours puis des étapes similaires aux étapes E10 à E12 décrites précédemment. Ces étapes incluent une détection de lignes droites dans l'image de contours, une recherche de couples de droites pouvant former des rails et un filtrage particulier initialisé et itéré sur l'image de contours pour déterminer un modèle de représentation de rails.

Le procédé selon l'invention est mis en œuvre par un circuit intégré dédié ou par des processeurs programmables, ou encore sous la forme d'un programme d'ordinateur mémorisé dans la mémoire d'un ordinateur.

Ainsi, la **figure 7** représente un mode de réalisation particulier d'un dispositif de détection et suivi de rails selon l'invention.

Le dispositif de détection et suivi de rails dans des images d'un flux vidéo comporte, pour au moins une image du flux vidéo :

Des moyens de formation d'une image de contours de rails,
Des moyens de filtrage particulier d'un ensemble de modèles de représentation de rails en fonction de l'image de contour de rails, chaque modèle étant défini par des paramètres qui comportent les abscisses de points de contrôle d'une représentation d'un axe central des rails dans un repère défini dans l'image et des coefficients d'une fonction linéaire représentant la distance entre la représentation de l'axe central des rails et respectivement des représentations ses rails gauche et droit en fonction de l'ordonnée dans le repère de l'image, de manière à déterminer un ensemble de modèles pondérés,
Des moyens d'estimation de la position des rails dans l'image en fonction de l'ensemble de modèles pondérés.

Le dispositif de détection et suivi de rails a la structure générale d'un ordinateur. Il comporte notamment un processeur 100 exécutant un programme d'ordinateur mettant en œuvre le procédé selon l'invention, une mémoire 101, une interface d'entrée 102 et une interface de sortie 103.

Ces différents éléments sont classiquement reliés par un bus 105.

L'interface d'entrée 102 est reliée à la caméra équipant le train et est destinée à recevoir les données à traiter.

Le processeur 100 exécute les traitements précédemment exposés. Ces traitements sont réalisés sous la forme d'instructions de code du programme d'ordinateur qui sont mémorisées par la mémoire 101 avant d'être exécutées par le processeur 100.

La mémoire 101 peut en outre mémoriser les résultats des traitements effectués.

L'interface de sortie 103 comporte par exemple un écran de visualisation et fournit une image de l'estimation de la position des rails.

**Revendications**

1. Procédé de détection et suivi de rails dans des images d'un flux vidéo filmé parallèlement à l'axe des rails, comportant, pour au moins une image du flux vidéo, l'étape de :

   Formation (E2) d'une image de contours de rails ($IC_i$),
   **caractérisé en ce qu'**il comporte, pour ladite au moins une image du flux vidéo, les étapes de :

   Estimation, par filtrage particulaire (E3), d'un ensemble de modèles pondérés de représentation de rails ($M_j$) en fonction de l'image de contour de rails, chaque modèle étant défini par des paramètres qui comportent d'une part les abscisses de points de contrôle d'une représentation d'un axe central des rails dans un repère défini dans l'image, les ordonnées des points de contrôle étant prédéfinies et distinctes, et d'autre part des coefficients d'une fonction linéaire représentant la distance entre la représentation de l'axe central des rails et respectivement des représentations des rails gauche et droit en fonction de l'ordonnée dans le repère de l'image,
   Estimation (E4) de la position des rails dans l'image en fonction de l'ensemble de modèles pondérés.

2. Procédé de détection et suivi de rails selon la revendication 1, **caractérisé en ce qu'**il comporte en outre une étape d'initialisation (E0) à laquelle sont déterminés les coefficients de la fonction linéaire représentant la distance entre la représentation de l'axe central des rails et respectivement les représentations des rails gauche et droit en fonction de l'ordonnée dans le repère de l'image.

3. Procédé de détection et suivi de rails selon la revendication 1 ou 2, **caractérisé en ce que** la représentation de l'axe central des rails est une spline cubique.

4. Procédé de détection et suivi de rails selon l'une quelconque des revendications 1 à 3, **caractérisé en ce que** l'ensemble de modèles de représentation de rails utilisé pour une image courante du flux vidéo qui n'est pas la première image du flux vidéo est déterminé par ré-échantillonnage (E32) et déplacement (E33) des modèles de représentation de rails pondérés d'une image précédente dans le flux vidéo.

5. Procédé de détection et suivi de rails selon l'une quelconque des revendications 1 à 4, **caractérisé en ce que** l'estimation, par filtrage particulaire (E3), de l'ensemble de modèles pondérés de représentation de rails comporte le calcul (E31) d'un poids ($P_j$) pour chaque modèle ($M_j$) de l'ensemble, le poids d'un modèle représentant l'adéquation du modèle à l'image de contours.

6. Procédé de détection et suivi de rails selon la revendication 5, **caractérisé en ce que** le calcul (E31) du poids d'un modèle donné comporte les étapes de :

   Calcul (E313) de la somme des valeurs de pixels de l'image de contours qui sont proches des rails du modèle donné, pour chaque ligne du modèle donné,
   Décrémentation (E314) du poids du modèle donné, à chaque fois que la somme calculée pour une ligne est nulle,
   Sommation (E314) du poids du modèle donné et de la somme des valeurs de pixels de l'image de contours qui sont proches des rails du modèle donné, à chaque fois que la somme calculée pour une ligne n'est pas nulle,
   Elévation (E316) à une puissance supérieure à 2 du poids du modèle donné, après que les étapes de calcul, décrémentation et sommation aient été effectuées pour toutes les lignes du modèle donné.

7. Procédé de détection et suivi de rails selon l'une quelconque des revendications 1 à 6, **caractérisé en ce que** l'estimation (E4) de la position des rails dans l'image comporte la détermination de paramètres d'estimation, un paramètre d'estimation étant calculé par la somme des paramètres ($X_{jk}$) correspondants de l'ensemble des modèles pondérés déterminés à l'étape d'estimation par filtrage particulaire, chacun des paramètres étant pondéré par leur poids respectif ($P_j$) du modèle auquel il appartient.

8. Procédé de détection et suivi de rails selon l'une quelconque des revendications 1 à 7, **caractérisé en ce que** l'estimation de la position des rails est pondérée (E5) en fonction de sa correspondance à l'image de contour de rails et son poids est comparé (E7) à un seuil de poids.

9. Procédé de détection et suivi de rails selon l'une quelconque des revendications 1 à 8, **caractérisé en ce qu'**il comporte en outre des étapes de :

Calcul (E6) de la moyenne de l'abscisse d'un point de contrôle donné sur une fenêtre temporelle glissante d'estimations de la position des rails consécutives,
Comparaison (E6) de l'abscisse courante du point de contrôle d'une estimation de la position courante des rails à la moyenne calculée,
Détection (E6) d'un changement de voie si l'écart est supérieur à un seuil d'écart.

10. Procédé de détection et suivi de rails selon l'une quelconque des revendications 8 ou 9, **caractérisé en ce qu'**il comporte une réinitialisation (E1) si le poids de l'estimation de la position des rails est inférieur au seuil de poids (E7) ou si un changement de voie est détecté (E6) ou encore lorsque le procédé est remis en marche après un arrêt.

11. Dispositif de détection et suivi de rails dans des images d'un flux vidéo filmé parallèlement à l'axe des rails, comportant, pour au moins une image du flux vidéo :

Des moyens de formation d'une image de contours de rails,
**caractérisé en ce qu'**il comporte, pour ladite au moins une image du flux vidéo :

Des moyens d'estimation, par filtrage particulaire, d'un ensemble de modèles pondérés de représentation de rails en fonction de l'image de contour de rails, chaque modèle étant défini par des paramètres qui comportent d'une part les abscisses de points de contrôle d'une représentation d'un axe central des rails dans un repère défini dans l'image, les ordonnées des points de contrôle étant prédéfinies et distinctes, et d'autre part des coefficients d'une fonction linéaire représentant la distance entre la représentation de l'axe central des rails et respectivement des représentations ses rails gauche et droit en fonction de l'ordonnée dans le repère de l'image,
Des moyens d'estimation de la position des rails dans l'image en fonction de l'ensemble de modèles pondérés.

12. Programme d'ordinateur comportant des instructions pour l'exécution des étapes du procédé selon l'une quelconque des revendications 1 à 10 lorsque ledit programme est exécuté par un ordinateur.

13. Support d'enregistrement lisible par un ordinateur sur lequel est enregistré un programme d'ordinateur comprenant des instructions pour l'exécution des étapes du procédé selon l'une quelconque des revendications 1 à 10.

## Patentansprüche

1. Verfahren zum Erfassen und Verfolgen von Bahnen in Bildern eines parallel zur Achse der Bahn aufgenommenen Videostreams, umfassend für mindestens ein Bild des Videostreams den Schritt:

Bilden (E2) eines Bildes von Bahnkonturen ($IC_i$),
**dadurch gekennzeichnet, dass**
es für das zumindest eine Bild des Videostreams die folgenden Schritte umfasst:

Schätzen eines Satzes von gewichteten Bahndarstellungsmodellen ($M_j$) in Abhängigkeit von dem Bahnkonturenbild durch Partikelfilterung (E3), wobei jedes Modell durch Parameter definiert ist, die einerseits die Abszissen von Kontrollpunkten einer Darstellung einer Mittelachse der Bahnen in einem im Bild definierten Bezugssystem enthalten, wobei die Ordinaten der Kontrollpunkte vordefiniert und individuell sind, und andererseits Koeffizienten einer linearen Funktion enthalten, die den Abstand zwischen der Darstellung der Mittelachse der Bahnen und den Darstellungen der linken bzw. rechten Bahn in Abhängigkeit von der Ordinate im Bildbezugssystem darstellen,
Schätzen (E4) der Position der Bahnen im Bild in Abhängigkeit von dem Satz gewichteter Modelle.

2. Verfahren zum Erfassen und Verfolgen von Bahnen nach Anspruch 1,
**dadurch gekennzeichnet, dass**
es ferner einen Schritt des Initialisierens (E0) umfasst, bei dem die Koeffizienten der linearen Funktion, die den Abstand zwischen der Darstellung der Mittelachse der Bahnen und den Darstellungen der linken bzw. rechten Bahn in Abhängigkeit von der Ordinate im Bildbezugssystem darstellen, bestimmt werden.

3. Verfahren zum Erfassen und Verfolgen von Bahnen nach Anspruch 1 oder 2,
**dadurch gekennzeichnet, dass**
die Darstellung der Mittelachse der Bahnen ein kubischer Spline ist.

4. Verfahren zum Erfassen und Verfolgen von Bahnen nach einem der Ansprüche 1 bis 3,
**dadurch gekennzeichnet, dass**
der Satz von Bahndarstellungsmodellen, der für ein aktuelles Bild des Videostreams verwendet wird, das nicht das erste Bild des Videostreams ist, durch Resampling (E32) und Verschieben (E33) der gewichteten Bahndarstellungsmodelle von einem vorherigen Bild in den Videostream bestimmt wird.

5. Verfahren zum Erfassen und Verfolgen von Bahnen nach einem der Ansprüche 1 bis 4,
**dadurch gekennzeichnet, dass**
das Schätzen des Satzes von gewichteten Bahndarstellungsmodellen durch Partikelfilterung (E3) das Berechnen (E31) eines Gewichts ($P_j$) für jedes Modell ($M_j$) in dem Satz umfasst, wobei das Gewicht eines Modells die Entsprechung des Modells mit dem Konturenbild darstellt.

6. Verfahren zum Erfassen und Verfolgen von Bahnen nach Anspruch 5, **dadurch gekennzeichnet, dass**
das Berechnen (E31) des Gewichts eines gegebenen Modells die Schritte umfasst:

Berechnen (E313) der Summe der Pixelwerte des Konturenbildes, die nahe den Bahnen des gegebenen Modells liegen, für jede Linie des gegebenen Modells,
Dekrementieren (E314) des Gewichts des gegebenen Modells immer dann, wenn die für eine Linie berechnete Summe Null ist,
Summieren (E314) des Gewichts des gegebenen Modells und der Summe der Pixelwerte des Konturenbildes, die nahe den Bahnen des gegebenen Modells liegen, immer dann, wenn die für eine Linie berechnete Summe nicht Null ist,
Erhöhen (E316) des Gewichts des gegebenen Modells mit einer Potenz größer als 2, nachdem die Schritte des Berechnens, Dekrementierens und Summierens für alle Linien des gegebenen Modells durchgeführt wurden.

7. Verfahren zum Erfassen und Verfolgen von Bahnen nach einem der Ansprüche 1 bis 6,
**dadurch gekennzeichnet, dass**
das Schätzen (E4) der Position der Bahnen im Bild das Bestimmen von Schätzparametern umfasst, wobei ein Schätzparameter durch die Summe der entsprechenden Parameter ($X_{jk}$) des Satzes von gewichteten Modellen berechnet wird, die im Schritt des Schätzens durch Partikelfilterung bestimmt wurden, wobei jeder der Parameter durch sein jeweiliges Gewicht ($P_j$) des Modells, zu dem er gehört, gewichtet wird.

8. Verfahren zum Erfassen und Verfolgen von Bahnen nach einem der Ansprüche 1 bis 7,
**dadurch gekennzeichnet, dass**
das Schätzen der Bahnposition in Abhängigkeit von ihrer Entsprechung mit dem Bahnkonturenbild gewichtet wird (E5) und ihr Gewicht mit einem Gewichtsschwellenwert verglichen wird (E7).

9. Verfahren zum Erfassen und Verfolgen von Bahnen nach einem der Ansprüche 1 bis 8,
**dadurch gekennzeichnet, dass**
es ferner die Schritte umfasst:

Berechnen (E6) des Mittelwerts der Abszisse eines gegebenen Kontrollpunkts über ein Gleitzeitfenster von aufeinanderfolgenden Schätzungen der Bahnposition,
Vergleichen (E6) der aktuellen Abszisse des Kontrollpunkts einer Schätzung der aktuellen Bahnposition mit dem berechneten Mittelwert,
Erfassen (E6) eines Gleiswechsels, wenn die Abweichung größer als ein Abweichungsschwellenwert ist.

10. Verfahren zum Erfassen und Verfolgen von Bahnen nach einem der Ansprüche 8 oder 9,
   **dadurch gekennzeichnet, dass**
   es ferner ein Zurücksetzen (E1) umfasst, wenn das Gewicht der Schätzung der Bahnposition unter dem Gewichtsschwellenwert (E7) liegt oder wenn ein Gleiswechsel erfasst wird (E6) oder auch wenn das Verfahren nach einem Stopp neu gestartet wird.

11. Vorrichtung zum Erfassen und Verfolgen von Bahnen in Bildern eines parallel zur Achse der Bahnen aufgenommenen Videostreams, enthaltend für zumindest ein Bild des Videostreams:

   Mittel zum Bilden eines Bildes von Bahnkonturen,
   **dadurch gekennzeichnet, dass**
   sie für das zumindest eine Bild des Videostreams enthält:

   Mittel zum Schätzen eines Satzes von gewichteten Bahndarstellungsmodellen in Abhängigkeit von dem Bahnkonturenbild durch Partikelfilterung, wobei jedes Modell durch Parameter definiert ist, die einerseits die Abszissen von Kontrollpunkten einer Darstellung einer Mittelachse der Bahnen in einem im Bild definierten Bezugssystem enthalten, wobei die Ordinaten der Kontrollpunkte vordefiniert und individuell sind, und andererseits Koeffizienten einer linearen Funktion enthalten, die den Abstand zwischen der Darstellung der Mittelachse der Bahnen und den Darstellungen der linken bzw. rechten Bahn in Abhängigkeit von der Ordinate im Bildbezugssystem darstellen,
   Mittel zum Schätzen der Position der Bahnen im Bild in Abhängigkeit von dem Satz gewichteter Modelle.

12. Computerprogramm, enthaltend Anweisungen zum Ausführen der Schritte des Verfahrens nach einem der Ansprüche 1 bis 10, wenn das Programm von einem Computer ausgeführt wird.

13. Aufzeichnungsträger, der von einem Computer lesbar ist, auf dem ein Computerprogramm aufgezeichnet ist, das Anweisungen zum Ausführen der Schritte des Verfahrens nach einem der Ansprüche 1 bis 10 enthält.

**Claims**

1. Method for detecting and monitoring rails in images of a video stream filmed parallel to the axis of the rails, comprising, for at least one image of the video stream, the step of:

   Forming (E2) an image of rail contours ($IC_i$),
   **characterised in that** it comprises, for said at least one image of the video stream, the steps of:

   Estimating, by particle filtering (E3), a set of weighted models of representations of rails ($M_j$) as a function of the image of rail contours, each model being defined by parameters which comprise on the one hand the x-coordinates of control points of a representation of a central axis of the rails in a coordinate system defined in the image, the y-coordinates of the control points being predefined and distinct, and on the other hand coefficients of a linear function representing the distance between the representation of the central axis of the rails and, respectively, representations of the left and right rails as a function of the y-coordinate in the coordinate system of the image,
   Estimating (E4) the position of the rails in the image as a function of the set of weighted models.

2. Method for detecting and monitoring rails according to claim 1, **characterised in that** it further comprises a step of initialising (E0) in which are determined the coefficients of the linear function representing the distance between the representation of the central axis of the rails and, respectively, representations of the left and right rails as a function of the y-coordinate in the coordinate system of the image.

3. Method for detecting and monitoring rails according to claim 1 or 2, **characterised in that** the representation of the central axis of the rails is a cubic spline.

4. Method for detecting and monitoring rails according to any of claims 1 to 3, **characterised in that** the set of models of representations of rails used for a current image of the video stream which is not the first image of the video stream is determined by resampling (E32) and displacement (E33) of the weighted models of representations of rails of a preceding image in the video stream.

5. Method for detecting and monitoring rails according to any of claims 1 to 4, **characterised in that** the estimating, by particle filtering (E3) of the set of weighted models of representations of rails comprises the calculating (E31) of a weight ($P_j$) for each model ($M_j$) of the set, with the weight of a model representing the adequacy of the model with the image of contours.

6. Method for detecting and monitoring rails according to claim 5, **characterised in that** the calculating (E31) of the weight of a given model comprises the steps of:

   Calculating (E313) the sum of the values of the pixels of the image of contours which are close to the rails of the given model, for each line of the given model,
   Decrementing (E314) the weight of a given model, each time that the sum calculated for a line is zero,
   Summing (E314) of the weight of the given model and of the sum of the values of the pixels of the image of contours that are close to the rails of the given model, each time that the sum calculated for a line is not zero,
   Raising (E316) to a power higher than 2 of the weight of the given model, after the steps of calculating, decrementing and summing have been carried out for all of the lines of the given model.

7. Method for detecting and monitoring rails according to any of claims 1 to 6, **characterised in that** the estimating (E4) of the position of the rails in the image comprises the determining of estimation parameters, with an estimation parameters being calculated by the sum of the corresponding parameters ($X_{jk}$) of the set of weighted models determined in the step of estimating by particle filtering, with each one of the parameters being weighted by their respective weight ($P_j$) of the model to which it belongs.

8. Method for detecting and monitoring rails according to any of claims 1 to 7, **characterised in that** the estimating of the position of the rails is weighted (E5) according to its correspondence with the image of rails contours and its weight is compared (E7) to a weight threshold.

9. Method for detecting and monitoring rails according to any of claims 1 to 8, **characterised in that** it further comprises steps of:

   Calculating (E6) the average of the x-coordinates of a given control point on a sliding time window of consecutive estimations of the position of rails,
   Comparing (E6) the current x-coordinate of the control point of an estimation of the current position of the rails with the calculated average,
   Detecting (E6) a change of track if the difference is greater than a difference threshold.

10. Method for detecting and monitoring rails according to any of claims 8 or 9, **characterised in that** it comprises a reinitialising (E1) if the weight of the estimation of the position of the rails is less than the weight threshold (E7) or if a change of track is detected (E6) or when the method is restarted after a stoppage.

11. Device for detecting and monitoring rails in images of a video stream filmed parallel to the axis of the rails, comprising, for at least one image of the video stream:

   Means for forming an image of rail contours,
   **characterised in that** it comprises, for said at least one image of the video stream:

      Means for estimating, by particle filtering, a set of weighted models of representations of rails as a function of the image of rail contours, each model being defined by parameters which comprise on the one hand the x-coordinates of control points of a representation of a central axis of the rails in a coordinate system defined in the image, the y-coordinates of the control points being predefined and distinct, and on the other hand coefficients of a linear function representing the distance between the representation of the central axis of the rails and, respectively, representations of the left and right rails as a function of the y-coordinate in the coordinate system of the image,
      Means for estimating the position of the rails in the image as a function of the set of weighted models.

12. Computer program comprising instructions for the executing of the steps of the method according to any of claims 1 to 10 when said program is executed by a computer.

13. Recording medium able to be read by a computer on which is recorded a computer program that comprises instructions for the executing of the steps of the method according to any of claims 1 to 10.

# FIG. 1

FIG. 2

FIG. 3

E31

E32

E33

E4

# FIG. 4

E310

E311

E312

E313

E314

E315

Pj    E316

# FIG. 5

```
┌─────────────────────────┐
│                         │── E10
└─────────────────────────┘
            │
            ▼
┌─────────────────────────┐
│                         │── E11
└─────────────────────────┘
            │
            ▼
┌─────────────────────────┐
│                         │── E12
└─────────────────────────┘
```

# FIG. 6

```
   100                      101
┌────────┐             ┌────────┐
│        │             │        │
│        │             │        │                105
└────────┘             └────────┘             ──
    ↕                      ↕
─────────────────────────────────────────────
    ↕                      ↕
┌────────┐             ┌────────┐
│        │             │        │
└────────┘             └────────┘
   102                     103
```

# FIG. 7